(19) Europäisches Patentamt
European Patent Office
Office européen des brevets

(11) Veröffentlichungsnummer : **0 416 377 B1**

# (12) EUROPÄISCHE PATENTSCHRIFT

(45) Veröffentlichungstag der Patentschrift : **12.01.94 Patentblatt 94/02**

(51) Int. Cl.$^5$ : **B01D 71/10,** B01D 67/00

(21) Anmeldenummer : **90116141.4**

(22) Anmeldetag : **23.08.90**

## (54) Cellulosische Membranen.

(30) Priorität : **02.09.89 DE 3929150**

(43) Veröffentlichungstag der Anmeldung : **13.03.91 Patentblatt 91/11**

(45) Bekanntmachung des Hinweises auf die Patenterteilung : **12.01.94 Patentblatt 94/02**

(84) Benannte Vertragsstaaten : **DE FR IT SE**

(56) Entgegenhaltungen :
**EP-A- 0 172 437**
**EP-A- 0 247 592**

(73) Patentinhaber : **Akzo N.V.**
**Postbus 9300 Velperweg 76**
**NL-6800 SB Arnhem (NL)**

(72) Erfinder : **Diamantoglou, Michael, Dr.**
**Kolpingstrasse 4**
**D-8765 Erlenbach (DE)**

(74) Vertreter : **Fett, Günter**
**Akzo Patente GmbH, Postfach 10 01 49**
**D-42097 Wuppertal (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 416 377 B1

## Beschreibung

Die Erfindung betrifft cellulosische Membranen.

Cellulosische Membranen sind bereits gut bekannt und werden zur Dialyse, insbesondere Hämodialyse, Elektrodialyse, zur umgekehrten Osmose oder auch zur Ultrafiltration eingesetzt.

Die Cellulose wird dabei entweder durch Verseifen von Celluloseacetat oder durch Ausfällen mit Säuren, Laugen, Salzlösungen oder Wasser aus Cuoxamlösungen, Viskoselösungen, oder Lösungen in aprotischen Lösungsmitteln mit Salzen sowie aus Lösungen in tertiärem Aminoxid regeneriert.

Aus DE-Patentschrift 31 36 573 ist ein Verfahren zur Herstellung einer Membran bekannt, bei dem eine flüssige Masse, die aus einer Mischung eines bei einer Temperatur von 8° bis 30°C hergestellten Reaktionsprodukts aus 100 Gew.-Teilen einer Kupferammoniumcellulose, die aus einer Cellulose mit einem durchschnittlichen Polymerisationsgrad von 500 bis 2500 hergestellt worden ist, mit 1 bis 40 Gew.-Teil(en) eines Ammonium- oder Alkalimetallsalzes eines Acrylsäure/Alkylacrylat- oder -methacrylat-Mischpolymerisats, eines Methacrylsäure/Alkylacrylat- oder -methacrylat-Mischpolymerisats und/oder eines Teilhydrolysats eines Polyalkylacrylats oder -methacrylats mit 10 bis 70 Äquivalentprozent Carbonsäuregruppen und einem Zahlenmittelmolekulargewicht von 500 bis 200 000 besteht, zu einem film- oder folienartigen Gebilde mit einer Stärke von 5 - 30 µm ausgeformt wird, der hierbei erhaltene Formling wird zu seiner Koagulation und Regenerierung in 5 - 50%-ige Schwefelsäure getaucht, danach wird aus dem Formling durch Eintauchen in eine 0,1 - 20%-ige wäßrige Lösung einer starken Base das Ammonium- oder Alkalimetallsalz des Polymerisats ausgewaschen und damit werden in dem Formling im wesentlichen dem Molekulargewicht des Salzes entsprechende feine Poren ausgebildet.

Bei diesem Verfahren verbleibt das zugesetzte Polymere nicht in der regenerierten Cellulosemembran, sondern wird vollständig unter Ausbildung von Poren ausgewaschen.

Aufgabe der vorliegenden Erfindung war es, cellulosische Membranen mit besonderen Eigenschaften, insbesondere auch einer verbesserten Biocompatibilität bei Hämodialysemembranen, zur Verfügung zu stellen.

Gelöst wird diese Aufgabe durch cellulosische Membranen, die dadurch gekennzeichnet sind, daß ein Gemisch aus Cellulose und Verbindungen des Types

$$[A - B]_n$$

aus Lösungen in Celluloselösungsmitteln zu Hohlfäden, Schläuchen oder Folien geformt und in Fällungsmitteln regeneriert wurde, wobei

A eine oder mehrere saure oder basische Gruppen, ausgewählt aus $-COOH$, $-SO_3H$, $-PO_3H_2$, $-NH_2$, $-NHR$, $-NR_2$,

$$-\overset{\oplus}{N}R_3,$$

$-NR_2{\rightarrow}O$, mit R = B und/oder
R = Alkylgruppe mit 1 bis 6 C-Atomen und/oder
R = Phenylgruppe, und

B ein geradkettiger oder verzweigter, gegebenenfalls substituierter Rest, ausgewählt aus Alkylresten mit wenigstens 10 C-Atomen, Arylalkylresten mit wenigstens 10 C-Atomen oder ein polymerisierbarer Monomerrest wie Alken-, Alkin-, Cycloolefin-, Aren-, Arylalken-, Arylalkin-, Allyl- oder Vinylrest,gegebenenfalls substituiert ist, wobei die Kette durch Heteroatome wie O, S, N, P, B und Si unterbrochen sein kann und

n =1 oder bei polymerisierbaren Monomeren wenigstens 10 und der Anteil des Gemisches an Cellulose wenigstens 65% beträgt.

Die Verbindungen $[A-B]_n$ müssen in den jeweils gewählten Celluloselösungsmitteln löslich und beständig sein und bei der Regeneration der Cellulose mit dieser ausgefällt werden. Das wird beispielsweise dadurch erreicht, daß den Celluloselösungsmitteln die entsprechenden Salze zugesetzt werden, die bei der Regeneration sich in die freien Säuren oder Basen umwandeln.

Das für die Regeneration von Cellulose zu Membranen am häufigsten angewandte Celluloselösungsmittel ist Cuoxam (Kupferammoniumkomplex, Schweitzers Reagens). Ein großer Teil der für das Gemisch beanspruchten Verbindungen erfüllt die vorstehend genannten Voraussetzungen, ist also als Salz in der Cuoxamlösung gut löslich und beständig.

Dementsprechend ist eine Ausführungsform der Erfindung dadurch gekennzeichnet, daß das Celluloselösungsmittel Cuoxam ist, wobei in besonderer Ausgestaltung in dem Fall, daß A eine basische Gruppe ist, das Fällungsmittel eine 8 - 15%-ige Alkalihydroxidlösung ist, und in dem Falle, daß A eine saure Gruppe ist,

das Fällungsmittel eine verdünnte Säure ist. Vorzugsweise ist die verdünnte Säure 5 - 12%-ige Schwefelsäure.

Für die Regeneration von Gemischen sind auch besonders Lösungen geeignet, bei denen das Celluloselösungsmittel ein Gemisch aus aprotischen Lösungsmitteln und einem Salz der Elemente Li, Ca und/oder Mg ist. Aprotische Lösungsmittel sind bevorzugt Dimethylacetamid und/oder Dimethylsulfoxid. In einer bevorzugten Ausführungsform wird LiCl und in einer anderen bevorzugten Ausführungsform $CaCl_2$ eingesetzt. Das bevorzugte Fällungsmittel ist in diesem Falle Wasser.

Ebenfalls gute cellulosische Membranen werden durch Regeneration aus Lösungen in tertiärem Aminoxid als Celluloselösungsmittel erhalten, wobei der Lösung, vorzugsweise auch die Cellulose nicht lösende Verdünnungsmittel, beispielsweise Wasser, zugesetzt wurden. Als Fällungsmittel wird ebenfalls Wasser bevorzugt.

Ein wesentliches Einsatzgebiet für die erfindungsgemäßen Membranen sind Dialysatoren, insbesondere für künstliche Nieren. Dabei ist die Biocompatibilität der Membranen von besonderem Interesse.

Neben dem Umstand, daß Dialysemembranen aus synthetischen bzw. natürlichen Polymeren bei ihrem Einsatz in künstlichen Nieren sehr leicht eine Gerinnung des Blutes hervorrufen können, die durch entsprechende medikamentöse Behandlung weitgehend verhindert wird, tritt bei Dialysemembranen aus regenerierter Cellulose häufig bei der Behandlung eines Nierenkranken mit Dialysatoren mit Cellulose-Membranen in der ersten Zeit der Dialysebehandlung ein vorübergehender Leukozytenabfall auf. Dieser Effekt wird als Leukopenie bezeichnet.

Leukopenie ist eine Erniedrigung der Leukozytenzahl (weiße Blutkörper) im Blutkreislauf. Die Zahl der weißen Blutkörper beim Menschen beträgt ca. 4000 bis 12000 Zellen/$mm^3$.

Die Leukopenie bei der Dialyse ist am stärksten ausgeprägt 15 bis 20 Minuten nach Beginn, wobei die Neutrophilen (das sind die mit neutralen oder gleichzeitig mit sauren und basischen Farbstoffen anfärbbaren Leukozyten) fast vollständig verschwinden können. Danach erholt sich die Zahl der Leukozyten innerhalb etwa einer Stunde wieder auf fast den Ausgangswert oder übersteigt diesen.

Wird nach Erholung der Leukozyten ein neuer Dialysator angeschlossen, tritt wieder Leukopenie im gleichen Ausmaß ein.

Cellulose-Membranen verursachen eine ausgeprägte Leukopenie. Auch wenn die klinische Bedeutung der Leukopenie wissenschaftlich nicht geklärt ist, besteht doch der Wunsch nach einer Dialysemembran für die Hämodialyse, die den Effekt der Leukopenie nicht zeigt, ohne daß dadurch die anderen sehr erwünschten Eigenschaften von Dialysemembranen aus regenerierter Cellulose beeinträchtigt werden.

Bei der Hämodialyse mittels Membranen aus regenerierter Cellulose hat man neben der Leukopenie auch eine deutliche Komplement-Aktivierung festgestellt. Das Komplement-System innerhalb des Blutserums ist ein komplexes, aus vielen Komponenten bestehendes Plasmaenzym-System, das auf verschiedene Weise der Abwehr von Schädigungen durch eindringende fremde Zellen (Bakterien u.a.) dient. Wenn Antikörper gegen den eindringenden Organismus vorhanden sind, kann komplementspezifisch durch den Komplex der Antikörper mit antigenen Strukturen der Fremdzellen aktiviert werden, anderenfalls erfolgt auf einem Alternativ-Weg durch besondere Oberflächenmerkmale der Fremdzellen die Komplement-Aktivierung. Das Komplement-System beruht auf einer Vielzahl von Plasma-Proteinen. Nach Aktivierung reagieren diese Proteine spezifisch in einer bestimmten Reihenfolge miteinander und am Ende wird ein zellschädigender Komplex gebildet, der die Fremdzelle zerstört.

Aus einzelnen Komponenten werden Peptide freigesetzt, die Entzündungserscheinungen auslösen und gelegentlich auch unerwünschte pathologische Folgen für den Organismus haben können. Es wird angenommen, daß die Aktivierung bei Hämodialysemembranen aus regenerierter Cellulose über den alternativen Weg erfolgt. Objektiv festgestellt werden diese Komplement-Aktivierungen durch eine Bestimmung der Komplement-Fragmente $C_{3a}$ und $C_{5a}$.

In diesem Zusammenhang wird auf folgende Arbeiten hingewiesen: D.E. Chenoweth et al., Kidney International Vol. 24, Seite 764 ff, 1983, und D.E. Chenoweth, Asaio-Journal Vol. 7, Seite 44 ff, 1984.

Im Rahmen der vorliegenden Erfindung wurde die Komplement-Aktivierung anhand der Fragmente $C_{5a}$ beurteilt. Dazu wurden in vitro 300 ml heparinisiertes Blutplasma über einen Zeitraum von 4 Std. mit einem Plasmafluß von 100 ml/min durch einen Dialysator mit 1 $m^2$ effektiver Austauschfläche rezirkuliert. In dem Plasma wurden die $C_{5a}$-Fragmente mit Hilfe der RIA-Methode (Upjohn-Test) bestimmt. Die relative Komplement-Aktivierung für den jeweiligen Meßzeitpunkt wurde durch Bildung des Verhältnisses aus der Konzentration zum Zeitpunkt der Probenahme und dem Anfangswert in Prozent errechnet. Zur Bewertung wurde der Meßwert nach 4 Std. Rezirkulationszeit herangezogen. Flachmembranen werden mit heparinisiertem Blutplasma 3 Stunden inkubiert und anschließend die $C_{5a}$-Fragmente bestimmt.

Der Durchschnittspolymerisationsgrad DP wurde in einer Cuen-Lösung nach DIN 54270 bestimmt.

Die Erfindung wird anhand der nachfolgenden Beispiele näher erläutert:

**Beispiel 1**

Membranen aus Linters-Cellulose und Polymethacrylsäurebutylmethacrylat-Copolymerem

A. Polymersynthese: Polymethacrylsäurebutylmethacrylat-Natriumsalz

In einem 1-l-Dreihalskolben mit Rührer, Tropftrichter und Kühler wurden 400 ml Methylisobutylketon vorgelegt. Nach dem Spülen der Apparatur mit Stickstoff wurde das Methylisobutylketon auf 90 °C erhitzt und eine Lösung von 51,6 g (0,60 Mol) Methacrylsäure, 56,8 g (0,40 Mol) Butylmethacrylat und 0,9 g Benzoylperoxid in 200 ml Methylisobutylketon innerhalb von 2 Stunden zugetropft. Die Mischung wurde noch weitere 22 Stunden bei 90 °C unter Stickstoff gerührt, wobei das Polymer ausfiel. Nach dem Abkühlen wurde die Mischung mit 500 ml Ethanol verdünnt und das Reaktionsprodukt mit 24,0 g (0,6 Mol) Natriumhydroxid, gelöst in 30 ml Wasser, neutralisiert. Das Polymer wurde abgesaugt, mit Ethanol gewaschen und im Vakuumtrockenschrank bei 60 °C getrocknet.

Ausbeute: 110,5 g (90,9 % d.Th.)

B. Membranherstellung

In Cuoxamlösung üblicher Zusammensetzung wurden 70 Teile Linters-Cellulose (DP = 1400, gemessen in Cuen) und 30 Teile des zuvor erhaltenen Polymeren (Beispiel 1A) gelöst und nach bekannter Verfahrensweise zu Flachmembranen verarbeitet. Die Membranen zeigen im Vergleich zu Membranen aus reiner Cellulose eine sehr geringe Komplementaktivierung. Die $C_{5a}$-Reduktion beträgt 97 %.

**Beispiele 2-4**

Aus Linters-Cellulose und dem Polymer von Beispiel 1A wurden analog Beispiel 1B Flachmembranen mit unterschiedlichem Polymergehalt hergestellt und ihre Komplementaktivierung anhand der Fragmente $C_{5a}$ bestimmt (Tabelle 1).

**Tabelle 1:**

Flachmembranen aus Linters-Cellulose und Polymethacrylbutylmethacrylat-Copolymerem

| Beispiel | Linters-Cellulose Teile | Polymer von Beispiel 1A Teile | $C_{5a}$-Reduktion % |
|---|---|---|---|
| 2 | 80 | 20 | 100 |
| 3 | 85 | 15 | 99 |
| 4 | 95 | 5 | 88 |

**Beispiel 5**

Membranen aus Linters-Cellulose und Polystyrolmaleinsäure-Copolymerem

Analog dem Beispiel 1 B wurden aus 85 Teilen Linters-Cellulose und 15 Teilen nach bekannter Verfahrensweise hergestelltem Polystyrolmaleinsäure-Natriumsalz Flachmembranen hergestellt. Im Vergleich zu

Membranen aus reiner Cellulose beträgt die $C_{5a}$-Reduktion 100 %.

**Beispiel 6**

Membranen aus Linters-Cellulose und Polystyrolmaleinsäure-Copolymerem

Analog dem Beispiel 1B wurden aus 90 Teilen Linters-Cellulose und 10 Teilen nach bekannter Verfahrensweise hergestelltem Polystyrolmaleinsäure-Natriumsalz Flachmembranen hergestellt. Im Gegensatz zu reinen Cellulosemembranen wiesen sie keine $C_{5a}$-Aktivierung auf.

**Beispiel 7**

Membranen aus Linters-Cellulose und Polyacrylsäurebutylmethacrylat-Copolymerem

A. Polymersynthese: Polyacrylsäurebutylmethacrylat-Natriumsalz

Analog dem Beispiel 1A wurden aus 43,2 g (0,60 Mol) Acrylsäure und 56,8 g (0,40 Mol) Butylmethacrylat in Methylisobutylketon 104,4 g Polyacrylsäurebutylmethacrylat-Natriumsalz synthetisiert.

B. Membranherstellung

Analog dem Beispiel 1B wurden aus 95 Teilen Linters-Cellulose und 5 Teilen des zuvor erhaltenen Polymers (Beispiel 7A) Flachmembranen hergestellt. Im Vergleich zu Membranen aus reiner Cellulose beträgt die $C_{5a}$-Reduktion 80 %.

**Beispiel 8**

Membranen aus Linters-Cellulose und Polyacrylsäurebutylacrylat-Copolymerem

A. Polymersynthese: Polyacrylsäurebutylacrylat-Natriumsalz

Analog dem Beispiel 1A wurden aus 28,4 g (0,4 Mol) Acrylsäure und 76,8 g (0,6 Mol) Butylacrylat in Methylisobutylketon 112,7 g Polyacrylsäurebutylacrylat-Natriumsalz synthetisiert.

B. Membranherstellung

Analog dem Beispiel 1B wurden aus 85 Teilen Linters-Cellulose und 15 Teilen des zuvor erhaltenen Polymers (Beispiel 8A) Flachmembranen hergestellt. Im Vergleich zu Membranen aus reiner Cellulose beträgt die $C_{5a}$-Reduktion 58 %.

**Beispiel 9**

In einem 1-l-Dreihalskolben wurden 16,2 g (0,10 Mol) Cellulose (DP = 1400, gemessen im Lösungsmittel Cuen) in 354 g (4,07 Mol) Dimethylacetamid suspendiert und bei 145°C 30 min lang unter Stickstoff aktiviert. Nach dem Abkühlen auf 100°C wurden 30 g (0,70 Mol) LiCl zugesetzt, wobei die Raumtemperatur um 5 - 10°C anstieg; anschließend wurde rasch auf Raumtemperatur (RT stets 20 - 25°C) abgekühlt und über Nacht gerührt. Zur klaren, viskosen Lösung wurden 5,8 g (0,2 Mol) Stearinsäure eingerührt. Die Lösung wurde filtriert, entlüftet und zu Flachmembranen verarbeitet. Im Vergleich zu reinen Cellulosemembranen beträgt die $C_{5a}$-Reduktion 92%.

**Beispiel 10 - 15**

Analog dem Beispiel 9 wurden aus Linters-Cellulose und Zusätzen die in der Tabelle 2 aufgeführten Membranen hergestellt.

Tabelle 2

| Beispiel | Cellulose Teile | Zusatz | Teile | $C_{5a}$-Reduktion % |
|---|---|---|---|---|
| 10 | 85 | $C_{11}H_{23}COOH$ | 15 | -- |
| 11 | 75 | $C_{17}H_{33}COOH$ | 25 | 98 |
| 12 | 89 | $C_{12}H_{25}/C_{14}H_{29}-NH_2$ | 11 | -- |
| 13 | 87 | $C_{16}H_{33}/C_{18}H_{37}-NH_2$ | 13 | 87 |
| 14 | 82 | $(C_{12}H_{25}/C_{14}H_{29})_2NH$ | 18 | 60 |
| 15 | 80 | $C_{14}H_{29}N(CH_3)_2\rightarrow O$ | 20 | 45 |

**Patentansprüche**

1. Cellulosische Membranen, dadurch gekennzeichnet, daß ein Gemisch aus Cellulose und Verbindungen des Types

$$[A - B]_n$$

aus Lösungen in Celluloselösungsmitteln zu Hohlfäden, Schläuchen oder Folien geformt und in Fällungsmitteln regeneriert wurde, wobei

A eine oder mehrere saure oder basische Gruppen, ausgewählt aus $-COOH$, $-SO_3H$, $-PO_3H_2$, $-NH_2$, $-NHR$, $-NR_2$,

$$\overset{\oplus}{-NR_3},$$

$-NR_2\rightarrow O$, mit R = B und/oder
R = Alkylgruppe mit 1 bis 6 C-Atomen und/oder
R = Phenylgruppe, und

B ein geradkettiger oder verzweigter, gegebenenfalls substituierter Rest, ausgewählt aus Alkylresten mit wenigstens 10 C-Atomen, Arylalkylresten mit wenigstens 10 C-Atomen oder ein polymerisierbarer Monomerrest wie Alken-, Alkin-, Cycloolefin-, Aren-, Arylalken-, Arylalkin-, Allyl- oder Vinylrest,gegebenenfalls substituiert ist, wobei die Kette durch Heteroatome wie O, S, N, P, B und Si unterbrochen sein kann, und

n =1 oder bei polymerisierbaren Monomeren wenigstens 10 und der Anteil des Gemisches an Cellulose wenigstens 65% beträgt.

2. Cellulosische Membranen nach Anspruch 1, dadurch gekennzeichnet, daß das Celluloselösungsmittel Cuoxam ist.

3. Cellulosische Membranen nach Anspruch 2, dadurch gekennzeichnet, daß A eine basische Gruppe und das Fällungsmittel eine 8 - 15%-ige Alkalihydroxidlösung ist.

4. Cellulosische Membranen nach Anspruch 2, dadurch gekennzeichnet, daß A eine saure Gruppe,das Fällungsmittel eine verdünnte Säure ist.

5. Cellulosische Membranen nach Anspruch 2, dadurch gekennzeichnet, daß die verdünnte Säure 5 - 12%-ige Schwefelsäure ist.

6. Cellulosische Membranen nach Anspruch 1, dadurch gekennzeichnet, daß das Celluloselösungsmittel ein Gemisch aus aprotischen Lösungsmitteln und einem Salz der Elemente Li, Ca und/oder Mg ist.

7. Cellulosische Membranen nach Anspruch 6, dadurch gekennzeichnet, daß das aprotische Lösungsmittel Dimethylacetamid und/oder Dimethylsulfoxid ist.

8. Cellulosische Membranen nach Anspruch 6 oder 7, dadurch gekennzeichnet, daß das Lithiumsalz LiCl ist.

9. Cellulosische Membranen nach Anspruch 6 oder 7, dadurch gekennzeichnet, daß das Calciumsalz $CaCl_2$ ist.

10. Cellulosische Membranen nach einem oder mehreren der Ansprüche 6 bis 9, dadurch gekennzeichnet, daß das Fällungsmittel Wasser ist.

11. Cellulosische Membranen nach Anspruch 1, dadurch gekennzeichnet, daß das Celluloselösungsmittel ein tertiäres Aminoxid, gegebenenfalls unter Zusatz eines Cellulose nicht lösenden Verdünnungsmittels, ist.

12. Cellulosische Membranen nach Anspruch 11, dadurch gekennzeichnet, daß das Fällungsmittel Wasser ist.

## Claims

1. Cellulosic membranes, characterised in that a mixture of cellulose and compounds of the type

$$[A - B]_n$$

was shaped into hollow threads, flexible tubes or films from solutions in cellulose solvents and regenerated in precipitating agents,

A denoting one or more acid or basic groups selected from COOH, $SO_3H$, $PO_3H_2$, $NH_2$, NHR, $-NR_2$,

$$\overset{\oplus}{NR_3},$$

$NR_2 \rightarrow O$, wherein R = B and/or R = alkyl group with 1 to 6 carbon atoms and/or R = phenyl group, and

B denotes a straight chain or branched, optionally substituted group selected from alkyl groups having at least 10 carbon atoms, arylalkyl groups having at least 10 carbon atoms or a polymerisable monomer group such as alkene, alkyne, cycloolefin, arene, arylalkene, arylalkyne, allyl or a vinyl group, and is optionally substituted, and the chain may be interrupted by hetero atoms such as O, S, N, P, B or Si and

n = 1 or in the case of polymerisable monomers is at least 10 and the proportion of cellulose in the mixture is at least 65%.

2. Cellulosic membranes according to Claim 1, characterised in that the cellulose solvent used is cuoxam.

3. Cellulosic membrane according to Claim 2, characterised in that A is a basic group and the precipitating agent is an 8 - 15% alkali metal hydroxide solution.

4. Cellulosic membranes according to Claim 2, characterised in that A is an acid group and the precipitating agent is a dilute acid.

5. Cellulosic membranes according to Claim 2, characterised in that the dilute acid is 5 - 12% sulphuric acid.

6. Cellulosic membranes according to Claim 1, characterised in that the cellulose solvent is a mixture of aprotic solvents and a salt of the elements Li, Ca and/or Mg.

**7.** Cellulosic membranes according to Claim 6, characterised in that the aprotic solvent is dimethylacetamide and/or dimethylsulphoxide.

**8.** Cellulosic membranes according to Claim 6 or 7, characterised in that the lithium salt is LiCl.

**9.** Cellulosic membranes according to Claim 6 or 7, characterised in that the calcium salt is $CaCl_2$.

**10.** Cellulosic membranes according to one or more of Claims 6 to 9, characterised in that the precipitating agent is water.

**11.** Cellulosic membranes according to Claim 1, characterised in that the cellulose solvent is a tertiary amine oxide optionally with the addition of a diluent which is a non-solvent for cellulose.

**12.** Cellulosic membranes according to Claim 11, characterised in that the precipitating agent is water.

## Revendications

**1.** Membranes cellulosiques, **caractérisées** en ce qu'un mélange de cellulose et de composés du type $[A - B]_n$ a été mis sous la forme de fibres creuses, de tuyaux ou de feuilles, à partir de solutions dans des solvants de la cellulose, et a été régénéré dans des précipitants,

A représentant un ou plusieurs groupes acides ou basiques, choisis parmi les groupes -COOH, $-SO_3H$, $-PO_3H_2$, $-NH_2$, -NHR, $-NR_2$, $-N^{\oplus}R_3$, et $NR_2 \rightarrow O$, R représentant B et/ou un groupe alkyle ayant 1 à 6 atomes de carbone et/ou un groupe phényle, et

B représentant un reste à chaîne droite ou ramifiée, éventuellement substitué, choisi parmi les restes alkyle ayant au moins 10 atomes de carbone et les restes arylalkyle ayant au moins 10 atomes de carbone, ou un reste de monomère polymérisable, comme un reste d'alcène, d'alcyne, de cyclooléfine, d'arène, d'arylalcène, d'arylalcyne, allyle ou vinyle, éventuellement substitué, les chaînes pouvant être interrompues par des hétéroatomes tels que des atomes d'oxygène, de soufre, d'azote, de phosphore, de bore et de silicium, et

n étant égal à 1 ou à au moins 10 dans le cas de monomères polymérisables, dans la formule précédente,

et la teneur en cellulose du mélange atteignant au moins 65 %.

**2.** Membranes cellulosiques selon la revendication 1, **caractérisées** en ce que le solvant de la cellulose est une solution d'oxyde de cuivre ammoniacale(cuoxam).

**3.** Membranes cellulosiques selon la revendication 2, **caractérisées** en ce que A représente un groupe basique et le précipitant est une solution à 8 à 15 % d'un hydroxyde de métal alcalin.

**4.** Membranes cellulosiques selon la revendication 2, **caractérisées** en ce que A représente un groupe acide et le précipitant est un acide dilué.

**5.** Membranes cellulosiques selon la revendication 4, **caractérisées** en ce que l'acide dilué est une solution à 5 à 12 % d'acide sulfurique.

**6.** Membranes cellulosiques selon la revendication 1, **caractérisées** en ce que le solvant de la cellulose est un mélange de solvants aprotiques et d'un sel des éléments Li, Ca et/ou Mg.

**7.** Membranes cellulosiques selon la revendication 6, **caractérisées** en ce que le solvant aprotique est le diméthylacétamide et/ou le diméthylsulfoxyde.

**8.** Membranes cellulosiques selon la revendication 6 ou 7, **caractérisées** en ce que le sel de lithium est LiCl.

**9.** Membranes cellulosiques selon la revendication 6 ou 7, **caractérisées** en ce que le sel de calcium est $CaCl_2$ .

**10.** Membranes cellulosiques selon l'une quelconque des revendications 6 à 9, **caractérisées** en ce que le

précipitant est l'eau.

11. Membranes cellulosiques selon la revendication 1, **caractérisées** en ce que le solvant de la cellulose est un oxyde d'amine tertiaire, auquel a été ajouté éventuellement un diluant ne dissolvant pas la cellulose.

12. Membranes cellulosiques selon la revendication 11, **caractérisées** en ce que le précipitant est l'eau.